# EUROPÄISCHE PATENTSCHRIFT

(11) **EP 4 384 733 B1**
(45) Veröffentlichungstag und Bekanntmachung des Hinweises auf die Patenterteilung: **15.10.2025**
(21) Anmeldenummer: 22741279.8
(22) Anmeldetag: 11.07.2022
(51) Int. Cl.: F16H 61/4017, F16H 61/431, F16H 61/472, B66C 13/23, B66D 1/08

(54) **VERFAHREN ZUM ANFAHREN IN EINEM HYDROSTATISCHEN ANTRIEB MIT BREMSE**
METHOD FOR STARTING UP IN A HYDROSTATIC DRIVE WITH BRAKE
PROCÉDÉ DE DÉMARRAGE DANS UN ENTRAÎNEMENT HYDROSTATIQUE AVEC FREIN

(30) Priorität: 14.07.2021 DE 102021207464; 08.09.2021 DE 102021209896
(43) Veröffentlichungstag der Anmeldung: 19.06.2024
(73) Patentinhaber: Robert Bosch GmbH, 70442 Stuttgart (DE)
(72) Erfinder: HUEBER, Stefan, 87766 Memmingerberg (DE); SCHMUTTERMAIR, Peter, 86459 Gessertshausen (DE); SCHUETTE, Michael, 89129 Langenau (DE)
(86) Internationale Anmeldenummer: PCT/EP2022/069212
(87) Internationale Veröffentlichungsnummer: WO 2023/285331

(56) Entgegenhaltungen:
- DE-A1- 102014 109 918
- DE-A1- 2 400 719
- DE-B1- 2 324 829
- US-A- 3 685 290
- US-A- 3 864 915
- US-A- 4 464 898
- US-A1- 2016 060 082

## Beschreibung

### TECHNISCHER BEREICH

Die vorliegende Erfindung betrifft das Gebiet eines Verfahrens zum Steuern eines hydrostatischen Antriebes, der eine erste mit einem Antrieb gekoppelte Hydromaschine und eine zweite mit einem Abtrieb gekoppelte Hydromaschine umfasst, wobei der Antrieb eine Bremse für die Blockierung des Abtriebes aufweist.

### STAND DER TECHNIK

In mobilen Arbeitsmaschinen werden Antriebe zum Halten einer Position ohne Moment der Antriebsmaschine mit einer Bremseinrichtung ausgerüstet, die ermöglicht, eine Bewegung der Arbeitsmaschine im Stillstand zu verhindern. Typische Antriebe sind z.B. Seilwindenantriebe. Diese Antriebe können sowohl einen offenen als auch einen geschlossenen Kreislauf mit einer Hydropumpe und einem Hydromotor, wobei die Hydropumpe typischerweise volumetrisch geregelt ist.

Unter Standardbedingungen erhält die Hydropumpe einen Antrieb von einem Motor und der Hydromotor ist dazu ausgebildet, die von der ersten Hydropumpe empfangene hydraulische Energie in Form von mechanischer Energie an einen externen Verbraucher (beispielsweise eine Motorwelle) zu übertragen. Der Motor kann ein beliebiger Verbrennungsmotor oder Elektromotor oder ein beliebiges anderes Element sein, das in der Lage ist, der Hydropumpe eine Drehung bereitzustellen.

Um die Bremseinrichtung ohne Bewegung des Abriebs zum Wiederanfahren zu lösen, ist es notwendig, dass die Antriebsmaschine vorab genau das Lastmoment aufbringt.

Zu diesem Zweck wird normalerweise ein Algorithmus benutzt, welcher zum Wiederanfahren vor Öffnen der Bremse einen vorab ermittelten geringen Volumenstrom aussteuert, der bewirkt, dass nach öffnen ein Momentengleichgewicht herrschen sollte und damit die Winde stehenbleibt. Der Pumpenvolumenstrom entgegen der Lastrichtung ist notwendig, um die in der Hydraulik vorhanden Leckagevolumenströme auszugleichen. Die Information über das notwendige Moment wird dabei aus einer Seilkraftmesseinrichtung in der Seilumlenkeinrichtung gewonnen (Permanent, auch bei geschlossener Bremse).

Das Problem der oben beschriebenen Lösung besteht darin, dass sich während der Öffnung das Antriebsmoment nicht an die Lastbedingungen und die Erwartungen des Fahrers anpasst und manchmal unerwünschte Verhaltensweisen seitens der Maschine auftreten, sodass kein Gleichgewicht erzeugt wird.

Insbesondere ist die Ermittlung des notwendigen Volumenstroms zum ruckfreien Öffnen der Haltebremse sehr aufwendig. Mit hydromechanischen Lagereglern auf der Pumpe ist es aufwendig den gewünschten Volumenstrom mit der benötigten Genauigkeit einzuregeln. Insbesondere kann das aktuelle Verdrängungsvolumen der Pumpe nur indirekt durch die Ansteuerwerte (Elektrischer Strom durch die Ansteuermagnete) ermittelt werden

DE 102014109918 A1 beschreibt grundsätzlich die Seilkraftregelung einer geschlossenen Kreislauf Winde mithilfe einer hydrostatischen/durchschenkbaren Pumpe und einer Steuereinrichtung. Jedoch wird hier kein Bezug genommen auf das Öffnen der Haltebremse und die damit einhergehende Lastübernahme durch den Antrieb.

US 2016/060082 A und US 3864915 A offenbaren Verfahren zur Steuerung eines hydrostatischen Antriebes, bei denen der Abtrieb eine Bremse für die Blockierung des Abtriebs aufweist.

Die Aufgabe der vorliegenden Erfindung besteht genau darin, diese oben beschriebenen Probleme zu lösen und daher ein Verfahren zur Steuerung des hydrostatischen Antriebes auszuführen, das ein unerwünschtes Verhalten automatisch verhindern kann.

### KURZFASSUNG

In dieser Anmeldung wird ein Beispiel von Antriebsmaschine beschrieben, bei dem ein hydrostatischer Motor im geschlossenen Kreis durch eine hydrostatische Pumpe angetrieben wird. Es ist dem Fachmann allerdings klar, dass diese Erfindung auch bei einem offenen Kreis benutzt werden kann.

Diese Erfindung betrifft ein Verfahren zur Steuerung eines hydrostatischen Antriebes, wobei der hydrostatische Antrieb mindestens zwei Hydromaschinen aufweist, von denen eine erste Hydromaschine mit einer Antriebsmaschine und eine zweite Hydromaschine mit einem Abtrieb koppelbar ist, wobei die erste Hydromaschine mit der zweiten Hydromaschine fluidisch verbunden ist, wobei der Abtrieb eine Bremse für die Blockierung des Abtriebes umfasst, wobei das Verfahren folgende Schritte umfasst:
a. Schließung der Bremse, sodass eine Drehbewegung der zweiten Hydromaschine blockiert wird;
b. Druckregelung der ersten Hydromaschine, bis die erste Hydromaschine einen Sollwert erreicht;
c. Nachdem die erste Hydromaschine den Sollwert erreicht hat, Erfassung des Schwenkwinkels der ersten Hydromaschine;
d. Regelung der ersten Hydromaschine, sodass der erfasste Schwenkwinkel gehalten wird oder Regelung der ersten Hydromaschine, sodass der von dem erfassten Schwenkwinkel abhängigen Volumenstrom durch die erste Hydromaschine bereitgestellt wird.

Der Kern dieser Erfindung liegt darin, dass die Ermittlung des notwendigen Volumenstroms bei geschlossener Bremse durch Einregelung der Pumpe auf den zu erwartenden Haltedruck und Messung des Schwenkwinkels (und vorzugsweise der Drehzahl) der Pumpe erfolgt. Der Vorteil liegt darin, dass sich das System automatisch an wechselnde Betriebsbedingen und Alterung anpasst.

### KURZE BESCHREIBUNG DER FIGUREN

Die vorliegende Erfindung wird unter Bezugnahme auf die beigefügten Figuren beschrieben, wobei sich gleiche Bezugszeichen auf gleiche Teile und / oder auf ähnliche Teile und / oder auf entsprechende Teile des Systems beziehen. Zu den Figuren:

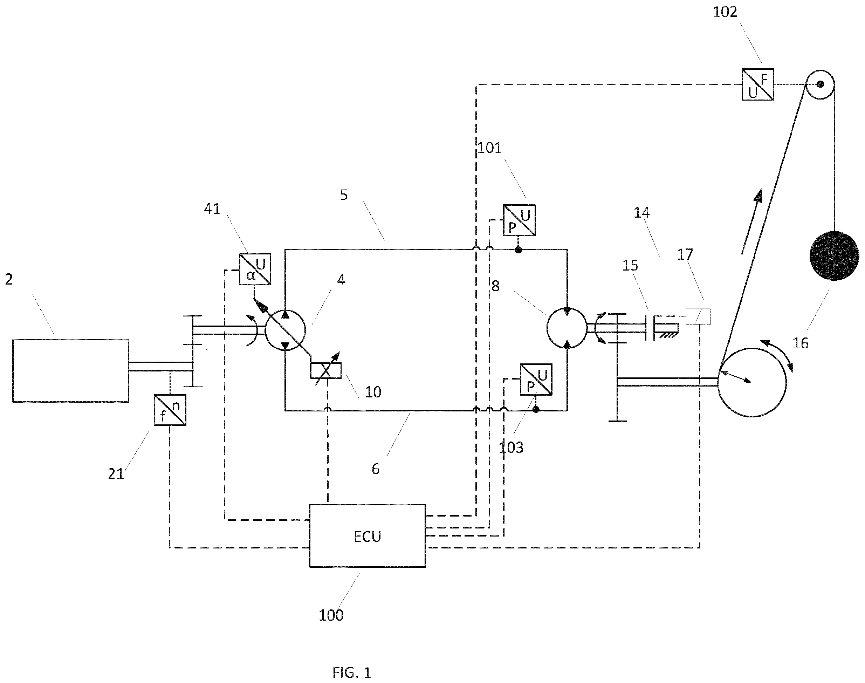

Figur 1 zeigt schematisch einen Schaltplan einen als Fahrantrieb ausgebildeten hydrostatischen Antrieb gemäß einem Ausführungsbeispiel der vorliegenden Erfindung.

### DETAILLIERTE BESCHREIBUNG

Im Folgenden wird die vorliegende Erfindung unter Bezugnahme auf bestimmte Ausführungsformen beschrieben, wie sie in den beigefügten Figuren gezeigt sind. Nichtsdestotrotz ist die vorliegende Erfindung nicht auf die besonderen Ausführungsformen beschränkt, die in der folgenden detaillierten Beschreibung beschrieben und in den Figuren gezeigt sind, sondern die beschriebenen Ausführungsformen veranschaulichen lediglich einige Aspekte der vorliegenden Erfindung, deren Schutzbereich durch die Ansprüche definiert ist.

Weitere Änderungen und Variationen der vorliegenden Erfindung sind für den Fachmann klar. Die vorliegende Beschreibung umfasst somit alle Änderungen und / oder Variationen der vorliegenden Erfindung, deren Schutzbereich durch die Ansprüche definiert ist.

Gemäß Figur 1 hat ein hydrostatischer Fahrantrieb eine Hydropumpe 4, die in geschlossenem hydraulischem Kreislauf über die Arbeitsleitungen 5 und 6 mit einem Hydromotor 8 zu dessen Druckmittelversorgung fluidisch verbunden ist. Dabei ist die Hydropumpe 4 mit einer Antriebsmaschine 2 über eine Triebwelle zur Übertragung eines Drehmoments gekoppelt. Die Kopplung ist in diesem Beispiel übersetzt, so dass die Drehzahl der Antriebsmaschine 2 und der Hydropumpe 4 unterschiedlich sind. Die Übersetzung ist aber nicht erforderlich.

Die Hydropumpe 4 ist als Axialkolbenpumpe in Schrägscheibenbauweise ausgestaltet und kann in beiden Drehrichtungen und sowohl im Pumpen- als auch im Motorbetrieb betrieben werden. Sie hat normalerweise ein verstellbares Verdrängungsvolumen und vorzugsweise eine als doppeltwirkender Hydrozylinder ausgestaltete Verstelleinrichtung 10.

Die Verstelleinrichtung 10 ist durch eine Steuereinheit 100 gesteuert. In diesem Ausführungsbeispiel kann die Hydropumpe 4 mittels der Steuereinheit 100 sowohl Druckgeregelt als auch Mengengesteuert werden. In diesem Beispiel ist der Hydromotor nicht verstellbar. Es ist dem Fachmann klar, dass die vorliegende Erfindung auch mit einem verstellbaren Hydromotor funktionieren kann.

Der Hydromotor ist mit einem Abtrieb 14 verbunden. Der Abtrieb 14 weist eine Bremse 15 für die Blockierung des Abtriebes 14, wobei wenn die Bremse 15 geschlossen ist, eine Drehbewegung des Hydromotors 8 blockiert ist. Die Bremse 15 ist mit einem Aktor 17, versehen, der konfiguriert ist, die Bremse 15 zu betätigen (zum Öffnen und zum Schließen).

Der hydrostatische Antrieb der vorliegenden Erfindung ist ein hydrostatischer Antrieb einer mobilen Arbeitsmaschine, wobei der Abtrieb vorzugsweise ein Seilwindenantrieb ist, der mithilfe eines Seilwinde Lasten 16 heben, senken oder heranziehen kann. Allerdings kann diese Erfindung auch bei anderem Arbeitsmaschinen angewendet werden, die niedrige Volumenströme erfordern, vorzugsweise bei Arbeitsmaschinen deren Hydropumpe mengengeregelt werden, wie z.B. bei einer Kehrmaschine oder bei Fräsen.

Die Hydropumpe 4 kann vorzugsweise mittels einer elektronischen Schwenkwinkelregelung gesteuert werden, wobei die Schwenkwinkelregelung auf Basis des Schwenkwinkelsensors 41 an der ersten Hydromaschine 4 erfolgt, um die Stellgenauigkeit zu verbessern.

Die Hydropumpe 4 kann vorzugsweise mittels einer elektronischen Druckregelung 100 gesteuert werden, wobei die Druckregelung auf Basis von Drucksensorsignalen 101, 103 in den Arbeitsleitungen der ersten Hydromaschine erfolgt, um die Stellgenauigkeit zu verbessern

In den folgenden Abschnitten wird ein Verfahren zur Steuerung des hydrostatischen Antriebs nach einer Ausführungsform der vorliegenden Erfindung beschrieben. Durch dieses Verfahren wird eins möglich, bei der Öffnung der Bremse 15 ein Gleichgewicht des Lasts 16 herzustellen.

In einem ersten Schritt wird die Bremse 15 mittels des Aktors 17 geschlossen, sodass eine Drehbewegung des Hydromotors blockiert wird. Vor der Schließung der Bremse 15 war die Pumpe mengengeregelt, sodass einen gewissen Volumenstrom an den Hydromotor 8 geliefert wurde.

Nach dem Erhalt dieser Information, wird die Steuerung 100 anfangen eine Druckregelung der Hydropumpe 4 auszuführen bis wann einen gewissen Druck durch die Pumpe erreicht wird. Der Grund dafür ist, dass in dieser Situation eine Drehung des Hydromotors 8 blockiert ist und aufgrund der Leckage, wenn die Hydropumpe in Stillstand wäre, der Druck in der Arbeitsleitungen 5 und 6 senken würde. Aus diesem Grund ist es notwendig die Hydropumpe 4 zu betätigen, damit diese Verluste kompensiert werden. Deswegen wird die Steuerung 100 eine Information über den Solldruck erhalten, der nach dem Öffnen der Bremse 15 benötigt wird, um ein Gleichgewicht für die Last zu erhalten.

Diese Information wird entweder durch einen Drucksensor 101 erhalten, der stromabwärts der Hydropumpe 4 angeordnet ist, oder durch den Kraftsensor 102, der eine Last erfasst. Wenn die Information von dem Kraftsensor 102 erhalten wird, wird diese Information in einen Solldruck in der Steuerung 100 umgewandelt.

Aus diesem Grund wird die Hydropumpe 4 druckgeregelt, bis wann den vorgegebenen Druck erreicht wird. Nachdem die Hydropumpe 4 den Sollwert erreicht hat, wird der Schwenkwinkel der Hydropumpe 4 mittels des Schwenkwinkelsensors 41 erfasst.

Die Hydropumpe wird dann so geregelt, dass der erfasste Schwenkwinkel gehalten wird oder sodass der von dem erfassten Schwenkwinkel abhängigen Volumenstrom durch die Hydropumpe 4 bereitgestellt wird. Insbesondere, wenn die Drehzahl der Hydropumpe 4 konstant bleibt, kann man direkt nur den Schwenkwinkel kontrollieren. Allerdings, wenn die Drehzahl sich ändert, muss man die neue Drehzahl berücksichtigen, da der Volumenstrom von der Drehzahl abhängig ist. Aus diesem Grund ist bei der Hydropumpe 4 oder bei dem externen Antrieb (wie in Figur 1 dargestellt) ein Drehzahlsensor 21 angeordnet, der konfiguriert ist, eine Information über die Drehzahl der Hydropumpe 4 an die Steuerung 100 zu liefern.

Nach diesem Schritt ist der hydrostatische Antrieb bereit für die Wiederöffnung der Bremse 15. Aus diesem Grund, wenn der Fahrer sich wünscht, die Bremse 15 wieder zu öffnen, wird die Steuerung 100 diese Aktion freigeben. Durch diese Lösung wird beim Öffnen der Bremse 15 zu keiner ungewollten Bewegung kommen, da der systembedingte Leckagevolumenstrom durch dieses Verfahren ausgeglichen wurde. Dieser Leckagevolumenstrom ist von zahlreichen Systemzuständen und der Alterung der Komponenten abhängig und durch die beschriebene Lösung wird der Effekt gelöscht.

In einer weiteren Ausführungsform der vorliegenden Erfindung, wenn die Drehzahl der Hydropumpe 4 sich ändert, wird der Volumenstrom der Hydropumpe 4 entsprechend angepasst, wobei in der Anpassung die Änderung der Leckagevolumenströmung berücksichtigt wird. Der Grund dafür ist, dass bei höheren Drehzahlen, höhere Leckagevolumenströmungen gibt.

In einer weiteren Ausführungsform der vorliegenden Erfindung wird das oben beschriebene Verfahren benutzt, um eine Kennlinie zu ermitteln, die in Zukunft benutzt werden kann, um eine Information über den Soll-Schwenkwinkel oder über den Soll-Volumenstrom in Abhängigkeit von einem Solldruck darzustellen. Dank dieser Kennlinie wird in Zukunft nicht mehr erforderlich sein, das oben beschriebene Verfahren jedes Mal auszuführen, da die Information über den Soll-Schwenkwinkel oder über den Soll-Volumenstrom aus der Kennlinie ermittelbar ist. Die einzige Information die erforderlich ist, ist der Solldruck, der mittels einem Drucksensor oder mittels einem Kraftsensor ermittelt werden kann (wie in dem Verlauf der Beschreibung erklärt wurde).

Um diese Kennlinie zu ermitteln, wird das oben beschriebene Verfahren jeweils für verschiedene Solldrücke wiederholt und für jeden Druck wird der Wert für den Soll-Schwenkwinkel oder für den Soll-Volumenstrom gespeichert. Aus diesen gespeicherten Werten wird dann eine Funktion ermittelt. Aus diesem Grund werden die Solldrücke möglichst gleichmäßig über den Arbeitsdruckbereich des Antriebs verteilt.

Diese Funktion wird dann gespeichert und kann auch für verschiedene Zwecke benutzt werden. In einem weiteren Ausführungsbeispiel wird diese Funktion benutzt, um bei geöffneter Bremse 15 die Hydropumpe 4 zu steuern, sodass die Position des Lasts 16 gehalten werden kann.

Da die Leckage von verschiedenen Bedingungen abhängig ist, die mit der Zeit sich ändern können, kann die Funktion regelmäßig aktualisiert werden. Aus diesem Grund kann mit Zeitabständen das Verfahren für einen oder mehreren Solldrücke wiederholt werden und mit der ermittelten Information über den Soll-Schwenkwinkel, kann die Funktion korrigiert werden.

Es kann vorgesehen sein, dass das Zugmittel (die Seilwinde), wie in Figur 1 dargestellt ist, über eine Umlenkrolle geführt ist, wobei der Kraftsensor 102 einen Kraftmessbolzen umfassen kann, an welchem die Umlenkrolle drehbar gelagert ist. Entsprechende Kraftmessbolzen sind am Markt in vielen Ausführung erhältlich, so dass auf einfache und kostengünstige Weise eine genaue Kraftmessung realisiert werden kann.

Es wird höflichst darauf hingewiesen, dass auch wenn der Hydromotor 8 von Figur 1 als Motor mit konstanten Verdrängungsvolumen beschrieben wurde, diese Erfindung auch mit einem in ihrem Verdrängungsvolumen verstellbaren Hydromotor 8 angewendet werden kann. In diesem Fall wird, vorzugsweise bei niedrigen Geschwindigkeiten der Seilwinde, der Schwenkwinkel der Hydropumpe 4 vergrößert. Wenn der Schwenkwinkel der Hydropumpe die maximale Stellung erreicht hat und die Geschwindigkeit weiter erhöht werden soll, wird dann der Schwenkwinkel (der Verdrängungsvolumen) des Hydromotors verringert.

Weiter ist ein Bedienelement vorgesehen (nicht in Figur 1 dargestellt), welches ebenfalls an die Steuerung 100 angeschlossen ist. Das Bedienelement ist beispielsweise als Bedienhebel ausgeführt, der ausgehend von einer Neutralstellung in zwei entgegengesetzte Richtungen verschwenkt werden kann. In der federvorgespannten Neutralstellung bewegt sich die Seilwinde nicht. Wenn der Bedienhebel vom Bediener aus betrachtet nach vorne verschwenkt wird, wird die Last 16 abgesenkt, wobei die Senkgeschwindigkeit näherungsweise proportional zur Hebelauslenkung ist. Wenn der Bedienhebel nach hinten verschwenkt wird, wird die Last 16 angehoben, wobei die Hubgeschwindigkeit näherungsweise proportional zur Hebelauslenkung ist. Die Stellung des Bedienelements wird vorzugsweise in Form eines elektrischen oder eines digitalen Signals an die Steuerung 100 übermittelt.

Es kann vorgesehen sein, dass während die Auslenkung des Bedienelements einen vorgegebenen Grenzwert unterschreitet ein maximales erstes Verdrängungsvolumen an der wenigstens einen ersten Hydromaschine 4 eingestellt wird, wobei im Übrigen ein gegenüber dem maximalen ersten Verdrängungsvolumen vermindertes erstes Verdrängungsvolumen eingestellt wird. Hierdurch kann die Seilwinde besonders schnell bewegt werden, wenn das Bedienelement weit ausgelenkt ist. Der genannte Grenzwert kann abhängig von der Richtung der Auslenkung des Bedienelements, also abhängig von der gewünschten Bewegungsrichtung der Last 16, unterschiedlich gewählt sein.

Während die vorliegende Erfindung unter Bezugnahme auf die oben beschriebenen Ausführungsformen beschrieben wurde, ist es für den Fachmann klar, dass es möglich ist, verschiedene Modifikationen, Variationen und Verbesserungen der vorliegenden Erfindung im Lichte der oben beschriebenen Lehre und innerhalb des Bereichs der beigefügten Ansprüche zu realisieren, ohne von dem Schutzbereich der Erfindung abzuweichen.

Aus diesem Grund, auch wenn in dieser Anmeldung ein Beispiel von einer Antriebsmaschine beschrieben wird, bei dem ein hydrostatischer Motor im geschlossenen Kreis durch eine hydrostatische Pumpe angetrieben wird, kann diese Erfindung auch bei einem offenen Kreislauf benutzt werden.

Dementsprechend soll die Erfindung nicht durch die spezifischen veranschaulichenden Ausführungsformen beschränkt sein, sondern nur durch den Schutzbereich der beigefügten Ansprüche.

## Patentansprüche

1. Verfahren zur Steuerung eines hydrostatischen Antriebes, wobei der hydrostatische Antrieb mindestens zwei Hydromaschinen (4, 8) aufweist, von denen eine erste Hydromaschine (4) mit einer Antriebsmaschine (2) und eine zweite Hydromaschine (8) mit einem Abtrieb (14) koppelbar ist, wobei die erste Hydromaschine (4) mit der zweiten Hydromaschine fluidisch verbunden ist, wobei der Abtrieb (14) eine Bremse (15) für die Blockierung des Abtriebes (14) umfasst, wobei das Verfahren folgende Schritte umfasst:
a. Schließung der Bremse (15), sodass eine Drehbewegung der zweiten Hydromaschine (8) blockiert wird;
b. Druckregelung der ersten Hydromaschine (4) bis die erste Hydromaschine (4) einen Sollwert erreicht;
c. Nachdem die erste Hydromaschine (4) den Sollwert erreicht hat, Erfassung des Schwenkwinkels (41) der ersten Hydromaschine (4);
d. Regelung der ersten Hydromaschine (4), sodass der erfasste Schwenkwinkel gehalten wird oder Regelung der ersten Hydromaschine (4) sodass der von dem erfassten Schwenkwinkel abhängigen Volumenstrom durch die erste Hydromaschine (4) bereitgestellt wird.

2. Verfahren nach Anspruch 1, wobei der Sollwert für die Druckregelung der Pumpe abhängig von einer Lastinformation des Abtriebs (14) ist.

3. Verfahren nach Anspruch 1 oder 2, wobei der Sollwert für die Druckregelung der Pumpe ein erfasster Druck vor der Schließung der Bremse (15) ist, wobei der Druck vorzugsweise Stromabwärts der ersten Hydromaschine (4) erfasst wird.

4. Verfahren nach einem der Ansprüche 1 bis 3, wobei nach dem Schritt d. die Bremse (15) wieder geöffnet wird.

5. Verfahren nach einem der Ansprüche 1 bis 4, wobei die erste Hydromaschine (4) sich mit der zweiten Hydromaschine (8) in einem geschlossenen Kreislauf befindet.

6. Verfahren nach einem der Ansprüche 1 bis 5, wobei die Schritte a. bis c. für verschiedene Sollwerte für die Druckregelung der Pumpe wiederholt werden, wobei mit der Berücksichtigung der erfassten Werten des Schwenkwinkels eine Funktion ermittelt wird, die eine Funktion für den Soll-Schwenkwinkel der ersten Hydromaschine (4) oder für den von dem Schwenkwinkel abhängigen Soll-Volumenstrom der ersten Hydromaschine (4) in Abhängigkeit von einem Wert für die Druckregelung der ersten Hydromaschine (4) darstellt.

7. Verfahren nach Anspruch 6, wobei die Funktion gespeichert wird und wobei die Funktion mit Zeitabständen mittels der Durchführung von den Schritten a. bis c. bei mindestens einem Sollwert für die Druckregelung der Pumpe angepasst wird.

8. Verfahren nach Anspruch 6 oder 7, wobei in dem Verfahren die Funktion benutzt wird, um die erste Hydromaschine (4) bei geöffneter Bremse (15) zu steuern.

9. Verfahren nach einem der Ansprüche 1 bis 8, wobei der hydrostatische Antrieb ein hydrostatischer Antrieb einer mobilen Arbeitsmaschine ist.

10. Verfahren nach Anspruch 9, wobei der Abtrieb (14) ein Seilwindenantrieb ist.

11. Verfahren nach einem der Ansprüche 1 bis 10, wobei in dem Schritt d., wenn die Drehzahl der ersten Hydromaschine (4) sich ändert, der Volumenstrom der ersten Hydromaschine (4) entsprechend angepasst wird, wobei in der Anpassung die Änderung der Leckagevolumenströmung berücksichtigt wird.

12. Verfahren nach einem der Ansprüche 1 bis 11, wobei in dem Schritt d. die erste Hydromaschine (4) mittels einer elektronischen Schwenkwinkelregelung (100) gesteuert wird, wobei die Schwenkwinkelregelung auf Basis des Schwenkwinkelsensors (41) an der ersten Hydromaschine (4) erfolgt, um die Stellgenauigkeit zu verbessern.

13. Verfahren nach einem der Ansprüche 1 bis 12, wobei in dem Schritt b. die erste Hydromaschine (4) mittels einer elektronischen Druckregelung (100) gesteuert wird, wobei die Druckregelung auf Basis von Drucksensorsignalen (101, 103) in den Arbeitsleitungen der ersten Hydromaschine erfolgt, um die Stellgenauigkeit zu verbessern.

## Claims

1. Method for controlling a hydrostatic drive, wherein the hydrostatic drive has at least two hydraulic machines (4, 8), of which a first hydraulic machine (4) can be coupled to a drive machine (2) and a second hydraulic machine (8) can be coupled to an output (14), wherein the first hydraulic machine (4) is fluidly connected to the second hydraulic machine, wherein the output (14) comprises a brake (15) for blocking the output (14), wherein the method comprises the following steps:
a. closing the brake (15), with the result that a rotational movement of the second hydraulic machine (8) is blocked;
b. regulating the pressure of the first hydraulic machine (4) until the first hydraulic machine (4) reaches a setpoint value;
c. after the first hydraulic machine (4) has reached the setpoint value, detecting the swash angle (41) of the first hydraulic machine (4);
d. regulating the first hydraulic machine (4), with the result that the detected swash angle is maintained, or regulating the first hydraulic machine (4), with the result that the volume flow dependent on the detected swash angle is provided by the first hydraulic machine (4).

2. Method according to Claim 1, wherein the setpoint value for regulating the pressure of the pump is dependent on a load information item of the output (14).

3. Method according to Claim 1 or 2, wherein the setpoint value for regulating the pressure of the pump is a detected pressure before the closure of the brake (15), wherein the pressure is preferably detected downstream of the first hydraulic machine (4).

4. Method according to one of Claims 1 to 3, wherein, after step d., the brake (15) is opened again.

5. Method according to one of Claims 1 to 4, wherein the first hydraulic machine (4) is in a closed circuit with the second hydraulic machine (8).

6. Method according to one of Claims 1 to 5, wherein the steps a. to c. are repeated for different setpoint values for regulating the pressure of the pump, wherein a function is determined with the consideration of the detected values of the swash angle, which function represents a function for the setpoint swash angle of the first hydraulic machine (4) or for the setpoint volume flow rate of the first hydraulic machine (4) which is dependent on the swivel angle, as a function of a value for controlling the pressure of the first hydraulic machine (4).

7. Method according to Claim 6, wherein the function is stored, and wherein the function is adapted at time intervals by means of the implementation of steps a. to c. in the case of at least one setpoint value for regulating the pressure of the pump.

8. Method according to Claim 6 or 7, wherein, in the method, the function is used to control the first hydraulic machine (4) with the brake (15) open.

9. Method according to one of Claims 1 to 8, wherein the hydrostatic drive is a hydrostatic drive of a mobile working machine.

10. Method according to Claim 9, wherein the unit (14) is a cable winch drive.

11. Method according to one of Claims 1 to 10, wherein, in step d., when the speed of the first hydraulic machine (4) changes, the volume flow of the first hydraulic machine (4) is adapted accordingly, wherein the change of the leakage volume flow is taken into account in the adaptation.

12. Method according to one of Claims 1 to 11, wherein, in step d., the first hydraulic machine (4) is controlled by means of an electronic swash angle regulation (100), wherein the swash angle regulation is carried out on the first hydraulic machine (4) based on the swash angle sensor (41), in order to improve the positioning accuracy.

13. Method according to one of Claims 1 to 12, wherein, in step b., the first hydraulic machine (4) is controlled by means of an electronic pressure regulation (100), wherein the pressure regulation is carried out based on pressure sensor signals (101, 103) in the working lines of the first hydraulic machine, in order to improve the actuation accuracy.

## Revendications

1. Procédé de commande d'un entraînement hydrostatique, l'entraînement hydrostatique présentant au moins deux machines hydrauliques (4, 8), dont une première machine hydraulique (4) peut être couplée à une machine d'entraînement (2) et une deuxième machine hydraulique (8) peut être couplée à une sortie (14), la première machine hydraulique (4) étant reliée fluidiquement à la deuxième machine hydraulique, la sortie (14) comprenant un frein (15) pour le blocage de la sortie (14), le procédé comprenant les étapes suivantes :
a. la fermeture du frein (15), de telle sorte qu'un mouvement de rotation de la deuxième machine hydraulique (8) est bloqué ;
b. la régulation de pression de la première machine hydraulique (4) jusqu'à ce que la première machine hydraulique (4) atteigne une valeur de consigne ;
c. après que la première machine hydraulique (4) a atteint la valeur de consigne, la détection de l'angle de pivotement (41) de la première machine hydraulique (4) ;
d. la régulation de la première machine hydraulique (4) de telle sorte que l'angle de pivotement détecté soit maintenu ou la régulation de la première machine hydraulique (4) de telle sorte que le débit volumique dépendant de l'angle de pivotement détecté soit fourni par la première machine hydraulique (4).

2. Procédé selon la revendication 1, dans lequel la valeur de consigne pour la régulation de pression de la pompe dépend d'une information de charge de la sortie (14).

3. Procédé selon la revendication 1 ou 2, dans lequel la valeur de consigne pour la régulation de pression de la pompe est une pression détectée avant la fermeture du frein (15), la pression étant de préférence détectée en aval de la première machine hydraulique (4).

4. Procédé selon l'une quelconque des revendications 1 à 3, dans lequel, après l'étape d., le frein (15) est à nouveau ouvert.

5. Procédé selon l'une quelconque des revendications 1 à 4, dans lequel la première machine hydraulique (4) se trouve dans un circuit fermé avec la deuxième machine hydraulique (8).

6. Procédé selon l'une quelconque des revendications 1 à 5, dans lequel les étapes a. à c. sont répétées pour différentes valeurs de consigne pour la régulation de pression de la pompe, une fonction étant déterminée en prenant en compte les valeurs détectées de l'angle de pivotement, qui représente une fonction pour l'angle de pivotement de consigne de la première machine hydraulique (4) ou pour le débit volumique de consigne de la première machine hydraulique (4) dépendant de l'angle de pivotement, en fonction d'une valeur pour la régulation de pression de la première machine hydraulique (4).

7. Procédé selon la revendication 6, dans lequel la fonction est mémorisée et dans lequel la fonction est adaptée à intervalles de temps au moyen de l'exécution des étapes a. à c. pour au moins une valeur de consigne pour la régulation de pression de la pompe.

8. Procédé selon la revendication 6 ou 7, dans lequel, dans le procédé, la fonction est utilisée pour commander la première machine hydraulique (4) lorsque le frein (15) est ouvert.

9. Procédé selon l'une quelconque des revendications 1 à 8, dans lequel l'entraînement hydrostatique est un entraînement hydrostatique d'une machine de travail mobile.

10. Procédé selon la revendication 9, dans lequel la sortie (14) est un entraînement de treuil à câble.

11. Procédé selon l'une quelconque des revendications 1 à 10, dans lequel, à l'étape d., lorsque la vitesse de rotation de la première machine hydraulique (4) varie, le débit volumique de la première machine hydraulique (4) est adapté en conséquence, l'adaptation tenant compte de la variation du débit volumique de fuite.

12. Procédé selon l'une quelconque des revendications 1 à 11, dans lequel, à l'étape d., la première machine hydraulique (4) est commandée au moyen d'une commande d'angle de pivotement électronique (100), la commande d'angle de pivotement étant effectuée sur la base du capteur d'angle de pivotement (41) sur la première machine hydraulique (4) afin d'améliorer la précision de réglage.

13. Procédé selon l'une quelconque des revendications 1 à 12, dans lequel, à l'étape b., la première machine hydraulique (4) est commandée au moyen d'une régulation de pression électronique (100), la régulation de pression étant effectuée sur la base de signaux de capteurs de pression (101, 103) dans les conduites de travail de la première machine hydraulique afin d'améliorer la précision de réglage.
